# EUROPEAN PATENT SPECIFICATION

(11) **EP 4 090 036 B1**
(45) Date of publication and mention of the grant of the patent: **10.07.2024**
(21) Application number: 21825245.0
(22) Date of filing: 31.05.2021
(51) Int. Cl.: H04N 21/431, H04N 19/167, H04N 21/4545

(54) **PRIVACY SHIELDING PROCESSING METHOD AND APPARATUS, ELECTRONIC DEVICE, AND MONITORING SYSTEM**
VERFAHREN UND VORRICHTUNG ZUR ABSCHIRMUNG DER PRIVATSPHÄRE, ELEKTRONISCHE VORRICHTUNG UND ÜBERWACHUNGSSYSTEM
PROCÉDÉ ET APPAREIL DE TRAITEMENT DE PROTECTION DE LA CONFIDENTIALITÉ, DISPOSITIF ÉLECTRONIQUE ET SYSTÈME DE SURVEILLANCE

(30) Priority: 19.06.2020 CN 202010568351
(43) Date of publication of application: 16.11.2022
(73) Proprietor: Hangzhou Hikvision Digital Technology Co., Ltd., Hangzhou, Zhejiang 310051 (CN)
(72) Inventor: NIU, Qifei, Hangzhou, Zhejiang 310051 (CN)
(74) Representative: BRP Renaud & Partner mbB Rechtsanwälte Patentanwälte Steuerberater
(86) International application number: PCT/CN2021/097376
(87) International publication number: WO 2021/254134

(56) References cited:
- CN-A- 101 933 027
- CN-A- 102 375 985
- CN-A- 104 660 975
- CN-A- 111 654 700
- JP-A- 2010 237 872
- JP-A- 2011 151 732
- US-A1- 2009 074 311
- US-A1- 2010 328 460
- US-A1- 2012 008 915

## Description

The present application claims the priority to a Chinese patent application No.202010568351.8 filed with the China National Intellectual Property Administration on Jun. 19, 2020 and entitled "PRIVACY SHIELDING PROCESSING METHOD AND APPARATUS, ELECTRONIC DEVICE, AND MONITORING SYSTEM".

### Technical field

The present application relates to the field of monitoring technologies, in particular to a privacy shielding processing method and apparatus, an electronic device and a monitoring system.

### Background

With the increasing attention paid by public to privacy protection, privacy shielding has been widely used in the field of video monitoring. Privacy shielding refers to a method of masking or blurring areas involved in personal privacy, such as faces and license plates in monitoring images in order to protect personal privacy.

In current privacy shielding processing methods, artificial intelligence is mainly used to detect objects in the monitoring images, and to detect areas in the monitoring image containing faces, license plates and other objects, and to perform uniform privacy shielding processing on detected areas.

However, when using artificial intelligence to detect the object, it is required that a whole object appears in the monitoring image, if the object is partially blocked, the object cannot be detected accurately, and the privacy shielding processing on this kind of object cannot be performed.

Document JP 2011 151732 A (RENESAS ELECTRONICS CORP) 4 August 2011 describes acquiring motion vector data for each block of an encoded image and blurring the block if the motion vector is greater than a threshold.

Document US 2010/328460 A1 (MERKEL MARCEL [CH] ET AL) 30 December 2010 (2010-12-30) describes applying privacy shielding in user selected regions of an image.

### Summary

The purpose of embodiments of the present application is to provide a privacy shielding processing method, apparatus, an electronic device and a monitoring system, so as to achieve the purpose of performing privacy shielding processing on a partially blocked object. The specific technical solutions are as follows:
Embodiments of the present application provides a privacy shielding processing method, apparatus, and machine-readable storage medium according to the attached claims.

Each video frame image in a video will be divided into a plurality of image blocks when encoding the video, and the motion vector information and position information of each of image blocks are generated, the motion vector information of one image block represents a position offset in the reference video frame image used in encoding of the image block, for example, the above reference video frame image may be an adjacent previous video frame image, it can be determined whether this image block is a moving-object image block located in the specified location area according to the motion vector information and the position information of one image block, if one image block is a moving-object image block located in the specified location area, it means that the image block appears in a location area where an object is blocked, and the image block belongs to a moving-object, therefore, the purpose of performing privacy shielding process on a partially blocked object is achieved by privacy shielding process on the moving-object image block located in the specified location area.

### Brief Description of the Drawings

In order to illustrate embodiments of the present application and technical solutions of the prior art more clearly, the following briefly introduces drawings needed in the embodiments and the prior art, obviously, the drawings in the following description are only some embodiments of the present application, and for those of ordinary skill in the art, other drawings can be obtained from these drawings without creative effort.
Fig. 1 is a flowchart of a privacy shielding processing method provided by an embodiment of the present application;
Fig. 2 is another flowchart of the privacy shielding processing method provided by an embodiment of the present application;
Fig. 3 is yet another flowchart of the privacy shielding processing method provided by an embodiment of the present application;
Fig. 4 is a schematic flowchart of performing privacy shielding process on a moving-object located in an edge region of a video frame image provided by an embodiment of the present application;
Fig. 5 is an example of a video frame image;
Fig. 6 is a schematic flowchart of performing privacy shielding process on a moving-object located in an edge area of a fixed reference provided by an embodiment of the present application;
Fig. 7 is another video frame image example;
Fig. 8 is a structural schematic diagram of a privacy shielding processing apparatus provided by an embodiment of the present application;
Fig. 9 is a schematic structural diagram of an electronic device provided by an embodiment of the present application;
Fig. 10 is a structural schematic diagram of a monitoring system provided by an embodiment of the present application.

### Detailed Description

In order to make objectives, technical solutions and advantages of the present application more clear, the present application will be further explained in detail with reference to the attached drawings and embodiments. Obviously, the described embodiments are only part of the embodiments of the present application, but not all of them. Based on the embodiments in the present application, all other embodiments obtained by ordinary skills in the art without creative labor belong to the scope of protection in the present application.

In one scenario of an embodiment of the present application, a plurality of monitoring points (one monitoring point is provided with one camera) are arranged, and these monitoring points are usually arranged in different corners of the scene, which can realize monitoring without dead ends in the same scene. The monitoring pictures in the scene can be displayed to the public with the client matched with an electronic device by connecting these monitoring points to the electronic device for image processing in the background, for the purpose of privacy protection, the facial features of people in the pictures cannot be displayed to the public, and the sensitive areas in the pictures cannot be displayed to the public, so it is necessary to protect the privacy of the people and sensitive positions in the monitoring points.

For scenes that are displayed to the public in real time, but some objects at an edge of the picture or some objects blocked by obstacles need privacy shielding, such as large supermarkets and other scenes with large picture and large traffic, there will be situations where the seller or the customer is only half in the picture at the edge of the picture or the place masked by the goods shelf, since there is no complete human object, corresponding human objects cannot be detected by artificial intelligence, therefore the privacy shielding of some objects at the edge of the picture or some objects masked by obstacles cannot be realized.

In order to achieve the purpose of privacy shielding processing for partially blocked objects, the embodiments of the present application provide a privacy shielding processing method, apparatus, an electronic device and a monitoring system. The privacy shielding processing method provided by an embodiment of the present application is first introduced. The method is applied to an electronic device, which can be a monitoring device (such as the above-mentioned camera) or a server for image processing in the background, and is not specifically limited here. The privacy shielding processing method provided by the embodiment of the present application can be implemented by at least one of software, hardware circuit and logic circuit provided in the electronic device.

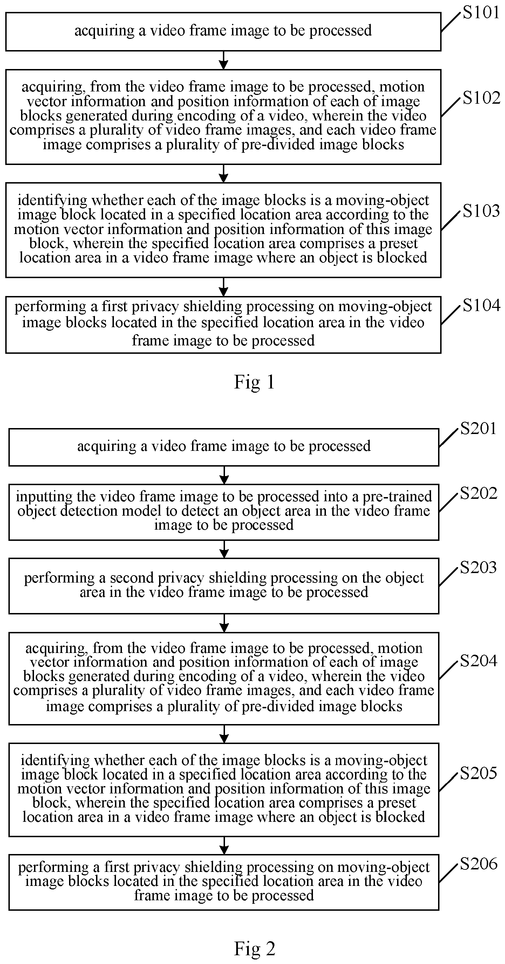

As shown in Fig. 1, which is a flowchart of a privacy shielding processing method provided by an embodiment of the present application, the method may include the following steps.

S 101, acquiring a video frame image to be processed.

S 102, acquiring, from the video frame image to be processed, motion vector information and position information of each of image blocks generated during encoding of a video, wherein the video comprises a plurality of video frame images, and each video frame image comprises a plurality of pre-divided image blocks;

S103, identifying whether each of the image blocks is a moving-object image block located in a specified location area according to the motion vector information and position information of this image block, wherein the specified location area comprises a preset location area in a video frame image where an object is blocked;

S104, performing a first privacy shielding processing on moving-object image blocks located in the specified location area in the video frame image to be processed.

Applying the embodiment of the present application, a video frame image to be processed is acquired, motion vector information and position information of each of image blocks generated during encoding of a video are acquired from the video frame image to be processed, it is identified whether each of the image blocks is a moving-object image block located in a specified location area according to the motion vector information and position information of this image block, and a first privacy shielding processing is performed on moving-object image blocks located in the specified location area in the video frame image to be processed. Each video frame image in a video will be divided into a plurality of image blocks when encoding the video, and the motion vector information and position information of each of image blocks are generated, the motion vector information of one image block represents a position offset in the reference video frame image used in encoding of the image block, for example, the above reference video frame image may be an adjacent previous video frame image, it can be determined whether this image block is a moving-object image block located in the specified location area according to the motion vector information and the position information of one image block, if one image block is a moving-object image block located in the specified location area, it means that the image block appears in a location area where an object is blocked, and the image block belongs to a moving-object, therefore, the purpose of performing privacy shielding processing on a partially blocked object is achieved by privacy shielding processing on the moving-object image block located in the specified location area.

After a video is collected, the monitoring device will encode the video, the encoding generally adopts H264, H265 and other encoding standards, motion estimation is used as an important part of video compression in these coding standards, in the inter-frame prediction coding, there is a certain correlation between the moving-objects in two video frame images, therefore, for a scene containing multiple moving-objects, the commonly used method is to divide a video frame image into multiple image blocks, so that the motion of each image block can be well represented by a parametric model. After dividing a video frame image into a plurality of image blocks, the position of each image block in the reference video frame image is searched, and the relative offset between them is obtained, which is the motion vector.

A video frame image to be processed is one video frame image in the encoded video, and the video frame image to be processed carries a motion vector of each image block compared to reference video frame image and position information of each image block. Therefore, motion vector information and position information of each of image blocks generated during encoding of a video can be acquired from the video frame image to be processed. Of course, when the encoded video is transmitted, the motion vector information and position information of each image block can also be transmitted together with the video in the form of encoded information, so that the motion vector information and position information of each of image blocks can be correspondingly acquired from the encoded information based on the video frame image to be processed.

The motion vector information indicates whether the image block is moving, and the position information indicates a specific position of the image block in the video frame image, therefore, according to the motion vector information and position information of each of the image blocks, it can be identified whether this image block is a moving-object image block located in a specified location area. The specified location area set here includes: a location area in a video frame image where an object is blocked, such as an edge area of the video frame image, an area near large obstacles, etc.

Alternatively, the preset location area in the video frame image where an object is blocked refers to: a preset edge area of the video frame image, and/or a preset edge area of a fixed reference object in the video frame image.

The fixed reference objects mentioned here can be large obstacles, buildings, plants, etc., and the edge area of which is the area near the outer contour.

The identification of whether each of the image blocks is a moving-object image block located in a specified location area is realized by determining whether this image block is a moving-object image block according to the motion vector information and whether this image block is located in a specified location area according to the position information, these two determinations can be executed simultaneously or in sequence, and are not specifically limited here.

In an implementation of the embodiment of the present application, S 103 can be specifically realized by the following steps:
Step 1, identifying whether each of the image blocks changes in motion according to a motion vector information of this image block.
Step 2, for an image block changed in motion, identifying whether this image block is located in the specified location area according to the position information of this image block.
Step 3, for an image block located in the specified location area, if it is determined that the motion vector of this image block reaches a preset threshold according to the motion vector information of the image block, determining this image block to be a moving-object image block located in the specified location area.

In an implementation of the embodiment of the present application, the identification of whether each of the image blocks is a moving-object image block located in a specified location area is performed sequentially, that is, identifying whether each image block changes in motion according to a motion vector information of each image block, and specifically identifying whether each image block changes in motion, that is to determine whether the motion vector of the same image block in the reference video frame image is equal to 0, and if not, it means that the image block has changed in motion, alternatively, it can also be determined whether the motion vector of the same image block in the reference video frame is less than a minimum threshold, if it is not less than the threshold, it means that the image block has changed in motion; if an image block changes in motion, identifying whether this image block is located in a specified location area according to the position information of this image block; if an image block is located in the specified location area, it is determined whether the motion vector of this image block reaches a preset threshold (larger than the above minimum threshold). if the preset threshold is reached, that is, the motion distance calculated according to components of the motion vector in different directions reaches the preset threshold, it means that the image block belongs to a moving-object, and it can be determined that it is a moving-object image block located in the specified location area. If the preset threshold is not reached, it means that the image block does not belong to a moving-object, which may be false detection and cannot be taken as a moving-object image.

In an implementation of the embodiment of the present application, after the above first step is performed, the method further includes: for any image block, if there is no motion change for this image block, keeping display content of this image block unchanged.

After the above second step is performed, the method further includes: if the image block is not located in the specified location area, keeping the display content of the image block unchanged; or, if the image block is located in the specified location area, and it is determined that the motion vector of this image block does not reach the preset threshold according to the motion vector information of this image block, keeping the display content of this image block unchanged.

Based on the above analysis, if it is identified that one image block has no change in motion, it means that this image block is a static image block and does not belong to a moving-object, thus it is necessary to keep the display content of the image block unchanged without privacy shielding processing, if it is identified that one image block has changed in motion, but it is not located in the specified location area, then the traditional privacy shielding processing method can be used to process the image block later, or the traditional privacy shielding processing method may have been used to process the image block before, therefore the display content of the image block can be kept unchanged without privacy shielding processing; if it is identified that one image block has changed in motion, and the image block is located in the specified location area, but the motion vector does not reach the preset threshold, it means that the image block is a false detected moving-object image block, and not a real moving-object image block, and the display content of the image block needs to be kept unchanged without privacy shielding processing.

After determining the moving-object image blocks located in the specified location area, perform a first privacy shielding processing on these image blocks, which can be any one of privacy shielding processes such as masking and blurring, which achieves the purpose of performing privacy shielding processing on a partially blocked object. In the specific implementation, a plurality of moving-object image blocks located in the specified location area can be determined, and adjacent image blocks form an object frame, when privacy shielding processing is performed, the overall privacy shielding processing can be performed on the object frame.

In an implementation of the embodiment of the present application, the specified location area may further include a location area in the video frame image where an object is not blocked, and then S104 may specifically include: performing the first privacy shielding processing on moving-object image blocks located in the location area where an object is blocked and moving-object image blocks located in the location area where an object is not blocked in the video frame image to be processed.

In a scenario of the embodiment of the present application, the video frame image has not been subjected to any privacy shielding processing before, if one image block is identified as a moving-object image block that is not located in the specified location area, that is, the image block belongs to a moving-object but is not located in the specified location area, privacy shielding processing can also be performed on the image block to achieve the purpose of privacy shielding processing on all moving-objects in the video frame image.

Compared with using artificial intelligence for object detection, in the privacy shielding processing method provided by the embodiment of the present application, there is no need to perform object detection, but identifying the moving-object image blocks located in the specified location area according to the obtained motion vector information and the position information of each of the image blocks, and performing privacy shielding processing on these image blocks. It can be seen that the embodiment of the present application can use less processing resources to realize privacy shielding processing on partially masked objects.

Based on the embodiment shown in Fig. 1, Fig. 2 shows another flow of the privacy shielding processing method provided by an embodiment of the present application, which includes the following steps.
S201, acquiring a video frame image to be processed.
S202, inputting the video frame image to be processed into a pre-trained object detection model to detect an object area in the video frame image to be processed.
S203, performing a second privacy shielding processing on the object area in the video frame image to be processed.
S204, acquiring, from the video frame image to be processed, motion vector information and position information of each of image blocks generated during encoding of a video, wherein the video comprises a plurality of video frame images, and each video frame image comprises a plurality of pre-divided image blocks;
5205, identifying whether each of the image blocks is a moving-object image block located in a specified location area according to the motion vector information and position information of this image block, wherein the specified location area comprises a preset location area in a video frame image where an object is blocked;
S206, performing a first privacy shielding processing on moving-object image blocks located in the specified location area in the video frame image to be processed.

In an implementation of the embodiment of the present application, artificial intelligence can be adopted to detect the object of the video frame image to be processed, and performing the second privacy shielding processing on the detected object area; then, performing the first privacy shielding processing on the moving-object image blocks located in the specified location area in the video frame image to be processed according to the motion vector information and the position information of each of the image blocks. The specific ways of artificial intelligence include: inputting the video frame image to be processed into a pre-trained object detection model to detect the object area in the video frame image to be processed, wherein the object detection model is pre-trained based on the sample image, and has the function of object detection, the object detection model can be a network model based on deep learning, and the traditional deep learning model can be adopted, the specific training process can use a traditional back propagation method, which will not be repeated here.

When artificial intelligence is used to perform privacy shielding processing, a complete object must appear in the video frame image before the object can be detected, however, the object cannot be detected in the case that an object appears at the edge of the video frame image, or the object is blocked by an obstacle for 2/3, and the remaining 1/3 appears in the video frame image, that is, a privacy shielding processing on the blocked object cannot be realized.

Therefore, in this embodiment, after performing the second privacy shielding processing on the video frame image to be processed by artificial intelligence, the method shown in Fig. 1 can be used to identify the moving-object image block located in the specified location area and perform the first privacy shielding processing on the identified moving-object image block located in the specified location area, wherein the first privacy shielding processing and the second privacy shielding processing can be any one of privacy shielding processes such as masking and blurring, which may be the same or different. In this way, it not only ensures that an object located in a general location in the video frame image is privacy masking processed, but also ensures that a moving-object located in the specified location area is privacy masking processed.

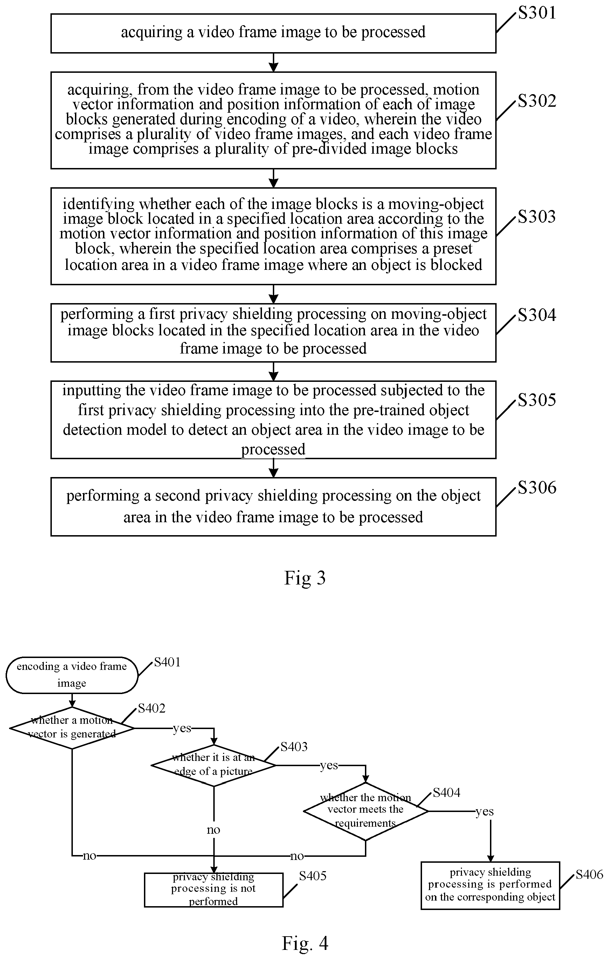

Based on the embodiment shown in Fig. 1, Fig. 3 shows another flowchart of the privacy shielding processing method provided by an embodiment of the present application, which includes the following steps.
5301, acquiring a video frame image to be processed.
S302, acquiring, from the video frame image to be processed, motion vector information and position information of each of image blocks generated during encoding of a video, wherein the video comprises a plurality of video frame images, and each video frame image comprises a plurality of pre-divided image blocks;
S303, identifying whether each of the image blocks is a moving-object image block located in a specified location area according to the motion vector information and position information of this image block, wherein the specified location area comprises a preset location area in a video frame image where an object is blocked;
S304, performing a first privacy shielding processing on moving-object image blocks located in the specified location area in the video frame image to be processed.
S305, inputting the video frame image to be processed subjected to the first privacy shielding processing into the pre-trained object detection model to detect an object area in the video image to be processed;
S306, performing a second privacy shielding processing on the object area in the video frame image to be processed.

In an implementation of the embodiment of the present application, the method shown in Fig. 1 can be first used to identify the moving-object image block located in the specified location area, and the first privacy shielding processing can be performed on the identified moving-object image block located in the specified location area. Then, the method of artificial intelligence is used to detect the object of the video frame image to be processed subjected to the first privacy shielding processing, and the second privacy shielding processing can be performed on the detected object area. In this way, it not only ensures that an object located in a general location in the video frame image is privacy masking processed, but also ensures that a moving-object located in the specified location area is privacy masking processed.

In the embodiment of the present application, for the moving-object image blocks that are not located in the specified location area, there is no need to perform privacy shielding processing on such image blocks again since the artificial intelligence is adopted to perform the object detection and privacy shielding processing.

In a specific implementation, the specified location area may be an edge area of a video frame image.

Specifically, Fig. 4 shows a schematic flowchart of performing privacy shielding processing for a moving-object located in an edge region of a video frame image, which includes the following steps:
S401, encoding a video frame image.
S402, determining whether an image block generates a motion vector; if yes, S403 is executed; if not, S405 is executed.

In this step, motion vector information and position information of each of image blocks in the video frame image to be processed can be acquired first; according to the motion vector information of each image block, determining whether a motion vector is generated, that is, determining whether the image block changes in motion or not.

S403, determining whether the image block is at an edge of a picture; if yes, S404 is executed; if not, S405 is executed.

In this step, when the motion vector is generated, for each image block, it can be determined whether this image block is at the edge of the picture according to the position information of this image block; that is, it can be determined whether this image block is located in the edge area of the video frame image.

S404, determining whether the motion vector meets the requirements; if yes, S406 is executed; if not, S405 is executed.

In this step, when the image block is at the edge of the picture, whether the motion vector meets the requirements can be determined according to the motion vector information of the image block, specifically, it can be determined whether the motion vector of the image block reaches the preset threshold.

S405, privacy shielding processing is not performed.

In this step, if no motion vector is generated or the image block is not at the edge of the picture or the motion vector does not meet the requirements, privacy shielding processing is not performed.

S406, privacy shielding processing is performed on the corresponding object.

In this step, when the motion vector is generated and the image block is at the edge of the picture, and the motion vector meets the requirements, privacy shielding processing is performed on the corresponding object, that is, privacy shielding processing is performed on the image block which generates the motion vector and is at the edge of the picture and the motion vector of which meets the requirements.

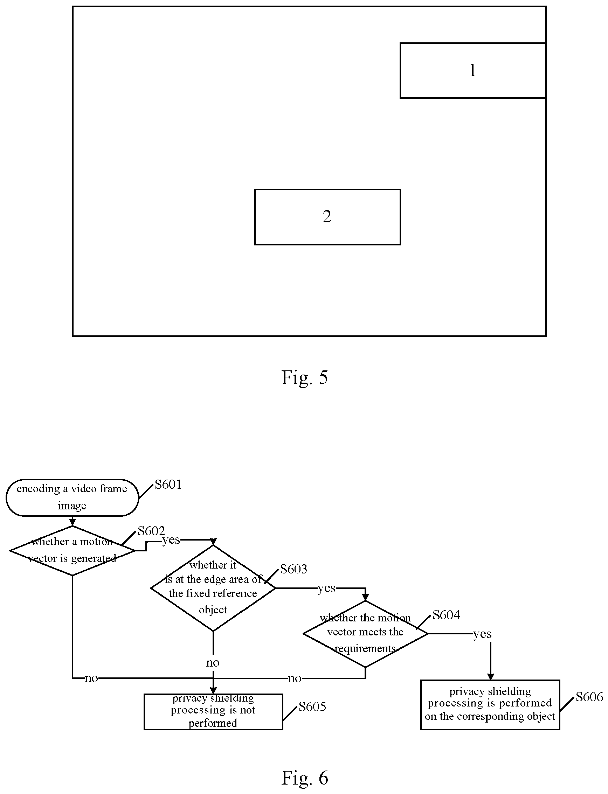

In a specific implementation, image blocks may be divided according to the change of pixel points, and similar pixel points are divided into a same image block, and the position information of each image block is obtained, after the image acquisition device is set up, the display range of video frame image may be determined. In a video frame image, the distance between the image block and the edge of the video frame image can be determined according to the position information of the image block, if the distance is less than a certain threshold, it can be determined that the image block is at the edge of the picture. As shown in Fig. 5, if the distance between an image block 1 and an edge of a video frame image is less than a threshold and the distance between an image block 2 and the edge of the video frame image is greater than the threshold, it can be determined that the image block 1 is at the edge of the picture, and the image block 2 is not at the edge of the picture.

In another specific implementation, the specified location area may be an edge area of a fixed reference object in the video frame image.

Specifically, Fig. 6 shows a schematic flowchart of performing privacy shielding processing for a moving-object located in an edge region of a fixed reference object, which includes the following steps:
S601, encoding a video frame image.
S602, determining whether an image block generates a motion vector; if yes, S603 is executed; if not, S605 is executed.

In this step, motion vector information and position information of each image block in the video frame image to be processed can be obtained first; it can be determined a motion vector is generated according to the motion vector information of each image block, that is, it can be determined whether the image block changes in motion or not.

S603, determining whether the image block is at the edge area of the fixed reference object; if yes, S604 is executed; if not, S605 is executed.

In this step, if the motion vector is generated, it is determined whether the image block is at the edge area of the fixed reference object according to the position information of each image block.

S604, determining whether the motion vector meets the requirements; if yes, S606 is executed; if not, S605 is executed.

In this step, if the image block is at the edge area of the fixed reference object, it can be determined whether the motion vector meets the requirements according to the motion vector information of the image block, specifically, it can be determined whether the motion vector of the image block reaches the preset threshold.

S605, privacy shielding processing is not performed.

In this step, if no motion vector is generated or the image block is not at the edge area of the fixed reference object or the motion vector does not meet the requirements, privacy shielding is not performed.

S606, privacy shielding processing is performed on the corresponding object.

In this step, when the motion vector is generated and the image block is at the edge area of the fixed reference object, and the motion vector meets the requirements, privacy shielding is performed on the corresponding object, that is, privacy shielding processing is performed on the image block which generates the motion vector and is at the edge area of the fixed reference object and the motion vector of which meets the requirements.

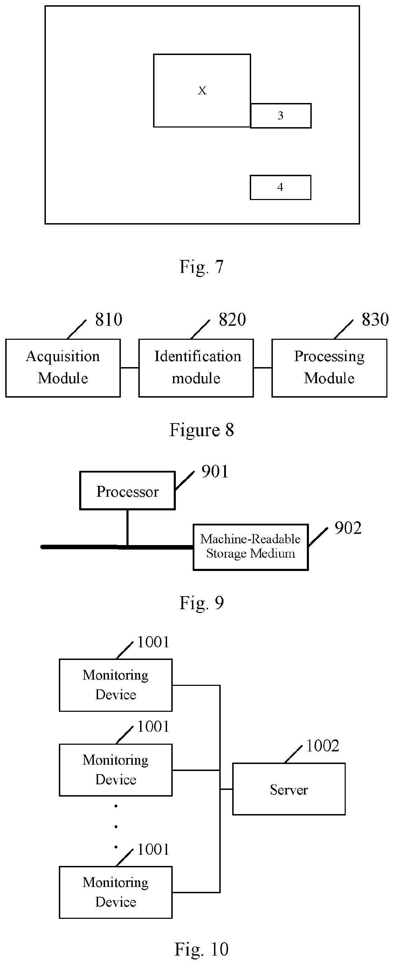

In a specific implementation, the image block may be divided according to the change of pixel points, and similar pixel points are divided into a same image block, or the image block may be divided based on the image block cutting strategy defined in coding standards such as H264 and H265; the position information of each image block is obtained, there are some fixed reference objects (such as buildings, large obstacles, trees, etc.) in the actual scene, these fixed reference objects have outer contours, and the position information of the outer contours of the fixed reference objects may be known, in video frame images, the distance between the image block and the outer contours of the fixed reference objects may be determined according to the position information of the image block, if the distance is less than a certain threshold, it can be determined that the image block is at the edge area of the fixed reference objects. As shown in Fig. 7, if the distance between the image block 3 and the outer contour of the fixed reference object X is smaller than the threshold and the distance between the image block 4 and the outer contour of the fixed reference object X is larger than the threshold, it can be determined that the image block 3 is at the edge area of the fixed reference object, but the image block 4 is not at the edge area of the fixed reference object.

Based on the above method embodiment, an embodiment of the present application provides a privacy shielding processing apparatus, as shown in Figure 8, which may include:
an acquisition module 810 for acquiring a video frame image to be processed; acquiring, from the video frame image to be processed, motion vector information and position information of each of image blocks generated during encoding of a video, wherein the video comprises a plurality of video frame images, and each video frame image comprises a plurality of pre-divided image blocks;
an identification module 820 for identifying whether each of the image blocks is a moving-object image block located in a specified location area according to the motion vector information and position information of this image block, wherein the specified location area comprises a preset location area in a video frame image where an object is blocked;
a processing module 830, for performing a first privacy shielding processing on moving-object image blocks located in the specified location area in the video frame image to be processed.

Alternatively, the identification module 820 may be specifically configured for:
identifying whether each of the image blocks changes in motion according to the motion vector information of this image block;
for an image block changed in motion, identifying whether this image block changed in motion is located in the specified location area according to the position information of this image block;
for an image block located in the specified location area, if it is determined that a motion vector of this image block reaches a preset threshold according to the motion vector information of this image block, determining this image block to be a moving-object image block located in the specified location area.

Alternatively, the identification module 820 may also be configured for:
for any image block, if there is no motion change for this image block, keeping display content of this image block unchanged;
for any image block, if this image block changes in motion and is not located in the specified location area, keeping the display content of this image block unchanged;
for any image block, if this image block changes in motion and is located in the specified location area, and it is determined that the motion vector of this image block does not reach the preset threshold according to the motion vector information of this image block, keeping the display content of this image block unchanged.

Alternatively, the specified location area further includes: a location area in the video frame image where an object is not blocked;
the processing module 830 may be specifically configured for performing the first privacy shielding processing on moving-object image blocks located in the location area where an object is blocked and the location area where an object is not blocked in the video frame image to be processed.

Alternatively, the apparatus may further include a detection module, configured for inputting the video frame image to be processed into a pre-trained object detection model to detect an object area in the video frame image to be processed; or, inputting the video frame image to be processed subjected to the first privacy shielding processing into the pre-trained object detection model to detect an object area in the video image to be processed.

The processing module 830 may be further configured for performing a second privacy shielding processing on the object area in the video frame image to be processed.

Alternatively, the preset location area in the video frame image where an object is blocked refers to: a preset edge area of the video frame image, and/or a preset edge area of a fixed reference object in the video frame image.

According to the embodiment of the present application, a video frame image to be processed is acquired, motion vector information and position information of each of image blocks generated during encoding of a video are acquired from the video frame image to be processed, it is identified whether this image block is a moving-object image block located in a specified location area according to the motion vector information and position information of this image block, and a first privacy shielding processing is performed on the moving-object image blocks located in the specified location area in the video frame image to be processed. Each video frame image in a video will be divided into a plurality of image blocks when encoding the video, and the motion vector information and position information of each image block are generated, the motion vector information of one image block represents a position offset in the reference video frame image used in encoding of the image block, for example, the above reference video frame image may be an adjacent previous video frame image, it can be determined whether this image block is a moving-object image block located in the specified location area according to the motion vector information and the position information of one image block, if one image block is a moving-object image block located in the specified location area, it means that the image block appears in a location area where an object is blocked, and the image block belongs to a moving-object, therefore, the purpose of performing privacy shielding processing on a partially blocked object is achieved by privacy shielding processing on the moving-object image block located in the specified location area.

The embodiment of the present application also provides an electronic device, as shown in Fig. 9, which includes a processor 901 and a machine-readable storage medium 902, wherein machine-executable instructions are stored in the machine-readable storage medium 902, which, when executed by a processor 901, cause the processor 901 to implement the privacy shielding processing method provided by any of the above embodiments.

The above machine-readable storage medium may include RAM (Random Access Memory) or NVM (Non-Volatile Memory), such as at least one disk memory. Alternatively, the machine-readable storage medium may also be at least one storage located remotely from the above processor.

The above processor may be a general-purpose processor, including CPU (Central Processing Unit), NP (Network Processor), etc., it may also be DSP (Digital Signal Processing), ASIC (Application Specific Integrated Circuit), FPGA (Field-Programmable Gate Array) or other programmable logic devices, discrete gate or transistor logic devices and discrete hardware components.

The machine-readable storage medium 902 and the processor 901 may transmit data through wired connection or wireless connection, and the electronic device may communicate with other devices through wired communication interface or wireless communication interface. Fig. 9 shows only an example of data transmission between the processor 901 and the machine-readable storage medium 902 through the bus, and it is not limited to the specific connection mode.

According to the embodiment of the present application, an electronic device is configured for acquiring a video frame image to be processed; acquiring, from the video frame image to be processed, motion vector information and position information of each of image blocks generated during encoding of a video, identifying whether each of the image blocks is a moving-object image block located in a specified location area according to the motion vector information and position information of this image block, performing a first privacy shielding processing on moving-object image blocks located in the specified location area in the video frame image to be processed. Each video frame image in a video will be divided into a plurality of image blocks when encoding the video, and the motion vector information and position information of each image block are generated, the motion vector information of one image block represents a position offset in the reference video frame image used in encoding of the image block, for example, the above reference video frame image may be an adjacent previous video frame image, it can be determined whether this image block is a moving-object image block located in the specified location area according to the motion vector information and the position information of one image block, if one image block is a moving-object image block located in the specified location area, it means that the image block appears in a location area where an object is blocked, and the image block belongs to a moving-object, therefore, the purpose of performing privacy shielding processing on a partially blocked object is achieved by privacy shielding processing on the moving-object image block located in the specified location area.

An embodiment of the present application further provides a machine-readable storage medium storing machine-executable instructions which, when called and executed by a processor, cause the processor to implement the privacy shielding processing method provided by any of the above embodiments.

In yet another embodiment provided by the embodiment of the present application, a computer program product containing instructions is also provided, which, when runs on a computer, causes the computer to execute the privacy shielding processing method provided by any of the above embodiments.

In the above-mentioned embodiments, it may be implemented in whole or in part by software, hardware, firmware or any combination thereof. When implemented in software, it may be fully or partially implemented in the form of a computer program product. The computer program product includes one or more computer instructions. When the computer program instructions are loaded and executed on a computer, all or part of the processes or functions according to the embodiments of the present application are generated. The computer may be a general-purpose computer, a special-purpose computer, a computer network, or other programmable devices. The computer instructions may be stored in a computer-readable storage medium or transmitted from one computer-readable storage medium to another, for example, the computer instructions may be transmitted from one website, computer, server or data center to another website, computer, server or data center by wired (such as coaxial cable, optical fiber, DSL (Digital Subscriber Line)) or wireless (such as infrared, wireless, microwave, etc.). The computer-readable storage medium may be any available medium that can be accessed by a computer or a data storage device such as a server, data center, etc. that includes an integration of one or more available media. The available media may be magnetic media (such as floppy disk, hard disk, magnetic tape), optical media (such as DVD (Digital Versatile Disc)), or semiconductor media (such as SSD (Solid State Disk)).

The embodiment of the present application also provides a monitoring system, as shown in Fig. 10, which includes a plurality of monitoring devices 1001 and a server 1002;
the plurality of monitoring devices 1001 are configured for collecting videos, encoding the videos and sending the encoded videos to a server 1002;
The server 1002 is configured for receiving the videos sent by the plurality of monitoring devices 1001, acquiring video frame images to be processed in the videos, acquiring, from the video frame images to be processed, motion vector information and position information of each of image blocks generated during encoding of the videos, wherein the videos comprise a plurality of video frame images, and each video frame image comprises a plurality of pre-divided image blocks; identifying whether each of the image blocks is a moving-object image block located in a specified location area according to the motion vector information and position information of this image block, wherein the specified location area comprises a preset location area in a video frame image where an object is blocked; performing a first privacy shielding processing on moving-object image blocks located in the specified location area in the video frame image to be processed, and displaying the video frame images to be processed subjected to the privacy shielding processing.

According to the embodiment of the present application, a plurality of monitoring devices are configured for collecting videos, encoding the videos, and sending the encoded videos to a server; the server is configured for receiving the videos sent by the plurality of monitoring devices, acquiring video frame images to be processed in the videos, and acquiring, from the video frame images to be processed, motion vector information and position information of each of image blocks generated during encoding of the videos, identifying whether each of the image blocks is a moving-object image block located in a specified location area according to the motion vector information and position information of this image block, performing a first privacy shielding processing on moving-object image blocks located in the specified location area in the video frame image to be processed. Each video frame image in a video will be divided into a plurality of image blocks when encoding the video, and the motion vector information and position information of each of image blocks block are generated, the motion vector information of one image block represents a position offset in the reference video frame image used in encoding of the image block, for example, the above reference video frame image may be an adjacent previous video frame image, it can be determined whether this image block is a moving-object image block located in the specified location area according to the motion vector information and the position information of one image block, if one image block is a moving-object image block located in the specified location area, it means that the image block appears in a location area where an object is blocked, and the image block belongs to a moving-object, therefore, the purpose of performing privacy shielding processing on a partially blocked object is achieved by privacy shielding processing on the moving-object image block located in the specified location area.

The monitoring system of the embodiment of the present application may be a device or a distributed system, that is, a plurality of monitoring devices and the server may be different components in one device, or they may be separated devices in distributed arrangement, which is not specifically limited here.

It should be noted that in this text, relational terms such as first and second are only configured to distinguish one entity or operation from another entity or operation, and do not necessarily require or imply any such actual relationship or sequence between these entities or operations. Moreover, the terms "comprising", "including" or any other variation thereof is intended to cover non-exclusive inclusion, so that a process, method, article or equipment that includes a series of elements not only includes those elements, but also includes other elements not explicitly listed, or also includes elements inherent to such process, method, article or equipment. Without further restrictions, an element defined by a statement "including one ..." does not exclude the existence of another identical element in the process, method, article or equipment that includes said element.

All the embodiments in this specification are described in relevant ways, and the same and similar parts of each embodiment may be referred to each other, and the differences between each embodiment and other embodiments are highlighted. Especially, for embodiments of apparatuses, electronic devices, machine-readable storage media, computer program products and monitoring systems, since they are basically similar to the method embodiments, the description is relatively simple, and the relevant points may be found in the partial descriptions of the method embodiments.

The above is only the preferred embodiment of the present application, and it should not be configured to limit it.

## Claims

1. A privacy shielding processing method comprising:
acquiring a video frame image to be processed;
acquiring, from the video frame image to be processed, motion vector information and position information of each of image blocks generated during encoding of a video, wherein the video comprises a plurality of video frame images, and each video frame image comprises a plurality of pre-divided image blocks;
identifying whether each of the image blocks is a moving-object image block located in a specified location area according to the motion vector information and position information of this image block, wherein the specified location area comprises a preset location area in a video frame image where an object is blocked;
performing a first privacy shielding processing on moving-object image blocks located in the specified location area in the video frame image to be processed,
wherein the preset location area in the video frame image where an object is blocked refers to: a preset edge area of the video frame image, and/or a preset edge area of a fixed reference object in the video frame image.

2. The method according to claim 1, wherein, identifying whether each of the image blocks is a moving-object image block located in a specified location area according to the motion vector information and position information of this image block, comprises:
identifying whether each of the image blocks changes in motion according to the motion vector information of this image block;
for an image block changed in motion, identifying whether this image block changed in motion is located in the specified location area according to the position information of this image block;
for an image block located in the specified location area, if it is determined that a motion vector of this image block reaches a preset threshold according to the motion vector information of this image block, determining this image block to be a moving-object image block located in the specified location area.

3. The method according to claim 2, wherein, after identifying whether each of the image blocks changes in motion according to the motion vector information of this image block, the method further comprises:
for any image block, if there is no motion change for this image block, keeping display content of this image block unchanged;
wherein for an image block changed in motion, after identifying whether this image block is located in the specified location area according to the position information of this image block, the method further comprises:
if this image block is not located in the specified location area, keeping display content of this image block unchanged;
if this image block is located in the specified location area, and it is determined that the motion vector of this image block does not reach the preset threshold according to the motion vector information of this image block, keeping the display content of this image block unchanged.

4. The method according to claim 1, wherein the specified location area further comprises: a location area in the video frame image where an object is not blocked;
wherein performing a first privacy shielding processing on the moving-object image blocks located in the specified location area in the video frame image to be processed, comprises:
performing the first privacy shielding processing on moving-object image blocks located in the location area where an object is blocked and moving-object image blocks located in the location area where an object is not blocked in the video frame image to be processed.

5. The method according to claim 1, wherein,
before acquiring, from the video frame image to be processed, motion vector information and position information of each of image blocks generated during encoding of a video, the method further comprises:
inputting the video frame image to be processed into a pre-trained object detection model to detect an object area in the video frame image to be processed;
performing a second privacy shielding processing on the object area in the video frame image to be processed;
or
after performing the first privacy shielding processing on moving-object image blocks located in the specified location area in the video frame image to be processed, the method further comprises:
inputting the video frame image to be processed subjected to the first privacy shielding processing into the pre-trained object detection model to detect an object area in the video image to be processed;
performing a second privacy shielding processing on the object area in the video frame image to be processed.

6. A privacy shielding processing apparatus comprising:
an acquisition module configured for acquiring a video frame image to be processed; acquiring, from the video frame image to be processed, motion vector information and position information of each of image blocks generated during encoding of a video, wherein the video comprises a plurality of video frame images, and each video frame image comprises a plurality of pre-divided image blocks;
an identification module configured for identifying whether each of the image blocks is a moving-object image block located in a specified location area according to the motion vector information and position information of this image block, wherein the specified location area comprises a preset location area in a video frame image where an object is blocked;
a processing module configured for performing a first privacy shielding processing on moving-object image blocks located in the specified location area in the video frame image to be processed,
wherein the preset location area in the video frame image where an object is blocked refers to: a preset edge area of the video frame image, and/or a preset edge area of a fixed reference object in the video frame image.

7. The apparatus according to claim 6, wherein the identification module is specifically configured for identifying whether each of the image blocks changes in motion according to the motion vector information of this image block; for an image block changed in motion, identifying whether this image block changed in motion is located in the specified location area according to the position information of this image block; for an image block located in the specified location area, if it is determined that a motion vector of this image block reaches a preset threshold according to the motion vector information of this image block, determining this image block to be a moving-object image block located in the specified location area.

8. The apparatus according to claim 7, wherein the identification module is further configured for, for any image block, if there is no motion change for this image block, keeping display content of this image block unchanged; for any image block, if this image block changes in motion and is not located in the specified location area, keeping display content of this image block unchanged; for any image block, if this image block changes in motion and is located in the specified location area, and it is determined that the motion vector of this image block does not reach the preset threshold according to the motion vector information of this image block, keeping the display content of this image block unchanged.

9. The apparatus according to claim 6, wherein the specified location area further comprises: a location area in the video frame image where an object is not blocked;
the processing module is specifically configured for performing the first privacy shielding processing on moving-object image blocks located in the location area where an object is blocked and moving-object image blocks located in the location area where an object is not blocked in the video frame image to be processed.

10. The apparatus according to claim 6, wherein the apparatus further comprises:
a detection module configured for inputting the video frame image to be processed into a pre-trained object detection model to detect an object area in the video frame image to be processed; or, inputting the video frame image to be processed subjected to the first privacy shielding processing into the pre-trained object detection model to detect an object area in the video image to be processed;
the processing module is further configured for performing a second privacy shielding processing on the object area in the video frame image to be processed.

11. A machine-readable storage medium storing machine-executable instructions which, when called and executed by a processor, cause the processor to implement the method according to any one of claims 1 to 5.

## Patentansprüche

1. Verarbeitungsverfahren zur Abschirmung der Privatsphäre, umfassend:
Erfassen eines zu verarbeitenden Video-Einzelbildes;
Erfassen von Bewegungsvektorinformationen und Positionsinformationen jedes von Bildblöcken, die beim Codieren eines Videos erzeugt werden, aus dem zu verarbeitenden Video-Einzelbild, wobei das Video eine Vielzahl von Video-Einzelbildern umfasst, und jedes Video-Einzelbild eine Vielzahl von vorunterteilten Bildblöcken umfasst;
Identifizieren, ob jeder der Bildblöcke ein Bildblock eines sich bewegenden Objekts ist, der sich gemäß den Bewegungsvektorinformationen und Positionsinformationen dieses Bildblocks in einem speziellen Ortsbereich befindet, wobei der spezielle Ortsbereich einen voreingestellten Ortsbereich in einem Video-Einzelbild umfasst, an dem ein Objekt blockiert ist;
Durchführen einer ersten Verarbeitung zur Abschirmung der Privatsphäre an Bildblöcken eines sich bewegenden Objekts, die sich in dem speziellen Ortsbereich in dem zu verarbeitenden Video-Einzelbild befinden,
wobei sich der voreingestellte Ortsbereich in dem Video-Einzelbild, an dem ein Objekt blockiert ist, bezieht auf: einen voreingestellten Randbereich des Video-Einzelbildes, und/oder einen voreingestellten Randbereich eines festen Referenzobjekts in dem Video-Einzelbild.

2. Verfahren nach Anspruch 1, wobei das Identifizieren, ob jeder der Bildblöcke ein Bildblock eines sich bewegenden Objekts ist, der sich gemäß den Bewegungsvektorinformationen und Positionsinformationen dieses Bildblocks in einem speziellen Ortsbereich befindet, umfasst:
Identifizieren, ob sich die Bewegung jedes der Bildblöcke gemäß den Bewegungsvektorinformationen dieses Bildblocks ändert;
bei einem Bildblock, dessen Bewegung sich geändert hat, Identifizieren, ob sich dieser Bildblock, dessen Bewegung sich geändert hat, gemäß den Positionsinformationen dieses Bildblocks in dem speziellen Ortsbereich befindet;
wenn bei einem Bildblock, der sich in dem speziellen Ortsbereich befindet, bestimmt wird, dass ein Bewegungsvektor dieses Bildblocks gemäß den Bewegungsvektorinformationen dieses Bildblocks eine voreingestellte Schwelle erreicht, Bestimmen, dass dieser Bildblock ein Bildblock eines sich bewegenden Objekts ist, der sich in dem speziellen Ortsbereich befindet.

3. Verfahren nach Anspruch 2, wobei das Verfahren nach dem Identifizieren, ob sich die Bewegung jedes der Bildblöcke gemäß den Bewegungsvektorinformationen dieses Bildblocks ändert, weiter umfasst:
bei jedem Bildblock, Unverändertlassen von Anzeigeinhalt dieses Bildblocks, wenn es bei diesem Bildblock keine Bewegungsänderung gibt;
wobei das Verfahren bei einem Bildblock, dessen Bewegung sich geändert hat, nach dem Identifizieren, ob sich dieser Bildblock gemäß den Positionsinformationen dieses Bildblocks in dem speziellen Ortsbereich befindet, weiter umfasst:
Unverändertlassen von Anzeigeinhalt dieses Bildblocks, wenn sich dieser Bildblock nicht in dem speziellen Ortsbereich befindet;
Unverändertlassen des Anzeigeinhalts dieses Bildblocks, wenn sich dieser Bildblock in dem speziellen Ortsbereich befindet und bestimmt wird, dass der Bewegungsvektor dieses Bildblocks gemäß den Bewegungsvektorinformationen dieses Bildblocks die voreingestellte Schwelle nicht erreicht.

4. Verfahren nach Anspruch 1, wobei der spezielle Ortsbereich weiter umfasst: einen Ortsbereich in dem Video-Einzelbild, an dem ein Objekt nicht blockiert ist;
wobei das Durchführen einer ersten Verarbeitung zur Abschirmung der Privatsphäre an den Bildblöcken eines sich bewegenden Objekts, die sich in dem speziellen Ortsbereich in dem zu verarbeitenden Video-Einzelbild befinden, umfasst:
Durchführen der ersten Verarbeitung zur Abschirmung der Privatsphäre an Bildblöcken eines sich bewegenden Objekts, die sich in dem Ortsbereich befinden, an dem ein Objekt blockiert ist, und Bildblöcken eines sich bewegenden Objekts, die sich in dem Ortsbereich befinden, an dem ein Objekt in dem zu verarbeitenden Video-Einzelbild nicht blockiert ist.

5. Verfahren nach Anspruch 1, wobei
das Verfahren vor dem Erfassen von Bewegungsvektorinformationen und Positionsinformationen jedes von Bildblöcken, die beim Codieren eines Videos erzeugt werden, aus dem zu verarbeitenden Video-Einzelbild weiter umfasst:
Eingeben des zu verarbeitenden Video-Einzelbildes in ein vortrainiertes Objekterkennungsmodell, um einen Objektbereich in dem zu verarbeitenden Video-Einzelbild zu erkennen;
Durchführen einer zweiten Verarbeitung zur Abschirmung der Privatsphäre an dem Objektbereich in dem zu verarbeitenden Video-Einzelbild;
oder
das Verfahren nach dem Durchführen der ersten Verarbeitung zur Abschirmung der Privatsphäre an Bildblöcken eines sich bewegenden Objekts, die sich in dem speziellen Ortsbereich in dem zu verarbeitenden Video-Einzelbild befinden, weiter umfasst:
Eingeben des zu verarbeitenden Video-Einzelbildes, das der ersten Verarbeitung zur Abschirmung der Privatsphäre unterzogen wird, in das vortrainierte Objekterkennungsmodell, um einen Objektbereich in dem zu verarbeitenden Videobild zu erkennen;
Durchführen einer zweiten Verarbeitung zur Abschirmung der Privatsphäre an dem Objektbereich in dem zu verarbeitenden Video-Einzelbild.

6. Verarbeitungseinrichtung zur Abschirmung der Privatsphäre, umfassend:
ein Erfassungsmodul, das zum Erfassen eines zu verarbeitenden Video-Einzelbildes konfiguriert ist; Erfassen von Bewegungsvektorinformationen und Positionsinformationen jedes von Bildblöcken, die beim Codieren eines Videos erzeugt werden, aus dem zu verarbeitenden Video-Einzelbild, wobei das Video eine Vielzahl von Video-Einzelbildern umfasst, und jedes Video-Einzelbild eine Vielzahl von vorunterteilten Bildblöcken umfasst;
ein Identifizierungsmodul, das zum Identifizieren konfiguriert ist, ob jeder der Bildblöcke ein Bildblock eines sich bewegenden Objekts ist, der sich gemäß den Bewegungsvektorinformationen und Positionsinformationen dieses Bildblocks in einem speziellen Ortsbereich befindet, wobei der spezielle Ortsbereich einen voreingestellten Ortsbereich in einem Video-Einzelbild umfasst, an dem ein Objekt blockiert ist;
ein Verarbeitungsmodul, das zum Durchführen einer ersten Verarbeitung zur Abschirmung der Privatsphäre an Bildblöcken eines sich bewegenden Objekts konfiguriert ist, die sich in dem speziellen Ortsbereich in dem zu verarbeitenden Video-Einzelbild befinden,
wobei sich der voreingestellte Ortsbereich in dem Video-Einzelbild, an dem ein Objekt blockiert ist, bezieht auf: einen voreingestellten Randbereich des Video-Einzelbildes, und/oder einen voreingestellten Randbereich eines festen Referenzobjekts in dem Video-Einzelbild.

7. Einrichtung nach Anspruch 6, wobei das Identifizierungsmodul speziell zum Identifizieren konfiguriert ist, ob sich die Bewegung jedes der Bildblöcke gemäß den Bewegungsvektorinformationen dieses Bildblocks ändert; bei einem Bildblock, dessen Bewegung sich geändert hat, Identifizieren, ob sich dieser Bildblock, dessen Bewegung sich geändert hat, gemäß den Positionsinformationen dieses Bildblocks in dem speziellen Ortsbereich befindet; wenn bei einem Bildblock, der sich in dem speziellen Ortsbereich befindet, bestimmt wird, dass ein Bewegungsvektor dieses Bildblocks gemäß den Bewegungsvektorinformationen dieses Bildblocks eine voreingestellte Schwelle erreicht, Bestimmen, dass dieser Bildblock ein Bildblock eines sich bewegenden Objekts ist, der sich in dem speziellen Ortsbereich befindet.

8. Einrichtung nach Anspruch 7, wobei das Identifizierungsmodul weiter zum Unverändertlassen, bei jedem Bildblock, von Anzeigeinhalt dieses Bildblocks konfiguriert ist, wenn es bei diesem Bildblock keine Bewegungsänderung gibt; bei jedem Bildblock, Unverändertlassen von Anzeigeinhalt dieses Bildblocks, wenn sich die Bewegung dieses Bildblocks ändert und er sich nicht in dem speziellen Ortsbereich befindet; bei jedem Bildblock, Unverändertlassen des Anzeigeinhalts dieses Bildblocks, wenn sich die Bewegung dieses Bildblocks ändert und er sich in dem speziellen Ortsbereich befindet und bestimmt wird, dass der Bewegungsvektor dieses Bildblocks gemäß den Bewegungsvektorinformationen dieses Bildblocks die voreingestellte Schwelle nicht erreicht.

9. Einrichtung nach Anspruch 6, wobei der spezielle Ortsbereich weiter umfasst: einen Ortsbereich in dem Video-Einzelbild, an dem ein Objekt nicht blockiert ist;
das Verarbeitungsmodul speziell zum Durchführen der ersten Verarbeitung zur Abschirmung der Privatsphäre an Bildblöcken eines sich bewegenden Objekts konfiguriert ist, die sich in dem Ortsbereich befinden, an dem ein Objekt blockiert ist, und Bildblöcken eines sich bewegenden Objekts, die sich in dem Ortsbereich befinden, an dem ein Objekt in dem zu verarbeitenden Video-Einzelbild nicht blockiert ist.

10. Einrichtung nach Anspruch 6, wobei die Einrichtung weiter umfasst:
ein Erkennungsmodul, das zum Eingeben des zu verarbeitenden Video-Einzelbildes in ein vortrainiertes Objekterkennungsmodell konfiguriert ist, um einen Objektbereich in dem zu verarbeitenden Video-Einzelbild zu erkennen; oder Eingeben des zu verarbeitenden Video-Einzelbildes, das der ersten Verarbeitung zur Abschirmung der Privatsphäre unterzogen wird, in das vortrainierte Objekterkennungsmodell, um einen Objektbereich in dem zu verarbeitenden Videobild zu erkennen;
das Verarbeitungsmodul weiter zum Durchführen einer zweiten Verarbeitung zur Abschirmung der Privatsphäre an dem Objektbereich in dem zu verarbeitenden Video-Einzelbild konfiguriert ist.

11. Maschinenlesbares Speichermedium, das maschinenausführbare Anweisungen speichert, die, wenn sie von einem Prozessor aufgerufen und ausgeführt werden, den Prozessor veranlassen, das Verfahren nach einem der Ansprüche 1 bis 5 umzusetzen.

## Revendications

1. Procédé de traitement de protection de la confidentialité comprenant :
l'acquisition d'une image de trame vidéo à traiter ;
l'acquisition, à partir de l'image de trame vidéo à traiter, d'informations de vecteur de mouvement et d'informations de position de chacun des blocs d'images générés pendant le codage d'une vidéo, dans lequel la vidéo comprend une pluralité d'images de trame vidéo, et chaque image de trame vidéo comprend une pluralité de blocs d'image pré-divisés ;
le fait d'identifier si chacun des blocs d'image est un bloc d'image d'objet en mouvement situé dans une zone d'emplacement spécifiée en fonction des informations de vecteur de mouvement et des informations de position de ce bloc d'image, dans lequel la zone d'emplacement spécifiée comprend une zone d'emplacement prédéfinie dans une image de trame vidéo où un objet est masqué ;
la réalisation d'un premier traitement de protection de la confidentialité sur des blocs d'image d'objet en mouvement situés dans la zone d'emplacement spécifiée dans l'image de trame vidéo à traiter,
dans lequel la zone d'emplacement prédéfinie dans l'image de trame vidéo où un objet est masqué fait référence à : une zone de bord prédéfinie de l'image de trame vidéo, et/ou une zone de bord prédéfinie d'un objet de référence fixe dans l'image de trame vidéo.

2. Procédé selon la revendication 1, dans lequel le fait d'identifier si chacun des blocs d'image est un bloc d'image d'objet en mouvement situé dans une zone d'emplacement spécifiée en fonction des informations de vecteur de mouvement et des informations de position de ce bloc d'image, comprend :
le fait d'identifier si chacun des blocs d'image change de mouvement en fonction des informations de vecteur de mouvement de ce bloc d'image ;
pour un bloc d'image dont le mouvement a changé, le fait d'identifier si ce bloc d'image dont le mouvement a changé est situé dans la zone d'emplacement spécifiée en fonction des informations de position de ce bloc d'image ;
pour un bloc d'image situé dans la zone d'emplacement spécifiée, s'il est déterminé qu'un vecteur de mouvement de ce bloc d'image atteint un seuil prédéfini en fonction des informations de vecteur de mouvement de ce bloc d'image, la détermination de ce bloc d'image comme étant un bloc d'image d'objet en mouvement situé dans la zone d'emplacement spécifiée.

3. Procédé selon la revendication 2, dans lequel, après avoir identifié si chacun des blocs d'image change de mouvement en fonction des informations de vecteur de mouvement de ce bloc d'image, le procédé comprend en outre :
pour tout bloc d'image, s'il n'y a aucun changement de mouvement pour ce bloc d'image, la conservation du contenu d'affichage de ce bloc d'image ;
dans lequel, pour un bloc d'image dont le mouvement a changé, après avoir identifié si ce bloc d'image est situé dans la zone d'emplacement spécifiée en fonction des informations de position de ce bloc d'image, le procédé comprend en outre :
si ce bloc d'image n'est pas situé dans la zone d'emplacement spécifiée, la conservation du contenu d'affichage de ce bloc d'image ;
si ce bloc d'image est situé dans la zone d'emplacement spécifiée, et qu'il est déterminé que le vecteur de mouvement de ce bloc d'image n'atteint pas le seuil prédéfini en fonction des informations de vecteur de mouvement de ce bloc d'image, la conservation du contenu d'affichage de ce bloc d'image.

4. Procédé selon la revendication 1, dans lequel la zone d'emplacement spécifiée comprend en outre : une zone d'emplacement dans l'image de trame vidéo où un objet n'est pas masqué ;
dans lequel la réalisation d'un premier traitement de protection de la confidentialité sur les blocs d'image d'objet en mouvement situés dans la zone d'emplacement spécifiée dans l'image de trame vidéo à traiter comprend :
la réalisation du premier traitement de protection de la confidentialité sur des blocs d'image d'objet en mouvement situés dans la zone d'emplacement où un objet est masqué et des blocs d'image d'objet en mouvement situés dans la zone d'emplacement où un objet n'est pas masqué dans l'image de trame vidéo à traiter.

5. Procédé selon la revendication 1, dans lequel,
avant d'acquérir, à partir de l'image de trame vidéo à traiter, des informations de vecteur de mouvement et des informations de position de chacun des blocs d'image générés lors du codage d'une vidéo, le procédé comprend en outre :
l'entrée de l'image de trame vidéo à traiter dans un modèle de détection d'objet pré-entraîné pour détecter une zone d'objet dans l'image de trame vidéo à traiter ;
la réalisation d'un second traitement de protection de la confidentialité sur la zone d'objet dans l'image de trame vidéo à traiter ;
ou
après avoir effectué le premier traitement de protection de la confidentialité sur des blocs d'image d'objet en mouvement situés dans la zone d'emplacement spécifiée dans l'image de trame vidéo à traiter, le procédé comprend en outre :
l'entrée de l'image de trame vidéo à traiter soumise au premier traitement de protection de la confidentialité dans le modèle de détection d'objet pré-entraîné pour détecter une zone d'objet dans l'image vidéo à traiter ;
la réalisation d'un second traitement de protection de la confidentialité sur la zone d'objet dans l'image de trame vidéo à traiter.

6. Appareil de traitement de protection de la confidentialité comprenant :
un module d'acquisition configuré pour acquérir une image de trame vidéo à traiter ; acquérir, à partir de l'image de trame vidéo à traiter, des informations de vecteur de mouvement et des informations de position de chacun des blocs d'images générés pendant le codage d'une vidéo, dans lequel la vidéo comprend une pluralité d'images de trame vidéo, et chaque image de trame vidéo comprend une pluralité de blocs d'image pré-divisés ;
un module d'identification configuré pour identifier si chacun des blocs d'image est un bloc d'image d'objet en mouvement situé dans une zone d'emplacement spécifiée en fonction des informations de vecteur de mouvement et des informations de position de ce bloc d'image, dans lequel la zone d'emplacement spécifiée comprend une zone d'emplacement prédéfinie dans une image de trame vidéo dans laquelle un objet est masqué ;
un module de traitement configuré pour effectuer un premier traitement de protection de la confidentialité sur des blocs d'image d'objet en mouvement situés dans la zone d'emplacement spécifiée dans l'image de trame vidéo à traiter,
dans lequel la zone d'emplacement prédéfinie dans l'image de trame vidéo où un objet est masqué fait référence à : une zone de bord prédéfinie de l'image de trame vidéo, et/ou une zone de bord prédéfinie d'un objet de référence fixe dans l'image de trame vidéo.

7. Appareil selon la revendication 6, dans lequel le module d'identification est spécifiquement configuré pour identifier si chacun des blocs d'image change de mouvement selon les informations de vecteur de mouvement de ce bloc d'image ; pour un bloc d'image dont le mouvement a changé, identifier si ce bloc d'image dont le mouvement a changé est situé dans la zone d'emplacement spécifiée en fonction des informations de position de ce bloc d'image ; pour un bloc d'image situé dans la zone d'emplacement spécifiée, s'il est déterminé qu'un vecteur de mouvement de ce bloc d'image atteint un seuil prédéfini en fonction des informations de vecteur de mouvement de ce bloc d'image, déterminer ce bloc d'image comme étant un bloc d'image d'objet en mouvement situé dans la zone d'emplacement spécifiée.

8. Appareil selon la revendication 7, dans lequel le module d'identification est en outre configuré pour, pour tout bloc d'image, s'il n'y a pas de changement de mouvement pour ce bloc d'image, conserver le contenu d'affichage de ce bloc d'image ; pour tout bloc d'image, si ce bloc d'image change de mouvement et n'est pas situé dans la zone d'emplacement spécifiée, conserver le contenu d'affichage de ce bloc d'image ; pour tout bloc d'image, si ce bloc d'image change de mouvement et est situé dans la zone d'emplacement spécifiée, et qu'il est déterminé que le vecteur de mouvement de ce bloc d'image n'atteint pas le seuil prédéfini en fonction des informations de vecteur de mouvement de ce bloc d'image, conserver le contenu d'affichage de ce bloc d'image.

9. Appareil selon la revendication 6, dans lequel la zone d'emplacement spécifiée comprend en outre : une zone d'emplacement dans l'image de trame vidéo où un objet n'est pas masqué ;
le module de traitement est spécifiquement configuré pour effectuer le premier traitement de protection de la confidentialité sur des blocs d'image d'objet en mouvement situés dans la zone d'emplacement où un objet est masqué et des blocs d'image d'objet en mouvement situés dans la zone d'emplacement où un objet n'est pas masqué dans l'image de trame vidéo à traiter.

10. Appareil selon la revendication 6, dans lequel l'appareil comprend en outre :
un module de détection configuré pour entrer l'image de trame vidéo à traiter dans un modèle de détection d'objet pré-entraîné pour détecter une zone d'objet dans l'image de trame vidéo à traiter ; ou entrer l'image de trame vidéo à traiter soumise au premier traitement de protection de la confidentialité dans le modèle de détection d'objet pré-entraîné pour détecter une zone d'objet dans l'image vidéo à traiter ;
le module de traitement est en outre configuré pour effectuer un second traitement de protection de la confidentialité sur la zone d'objet dans l'image de trame vidéo à traiter.

11. Support de stockage lisible par machine stockant des instructions exécutables par machine qui, lorsqu'elles sont appelées et exécutées par un processeur, amènent le processeur à mettre en oeuvre le procédé selon l'une quelconque des revendications 1 à 5.
